# EUROPEAN PATENT SPECIFICATION

(11) **EP 3 744 474 B1**
(45) Date of publication and mention of the grant of the patent: **23.08.2023**
(21) Application number: 20177158.1
(22) Date of filing: 28.05.2020
(51) Int. Cl.: B23Q 11/00

(54) **CHIP EVACUATOR TOOL**
SPÄNEBESEITIGUNGSWERKZEUG
OUTIL ÉVACUATEUR DE COPEAUX

(30) Priority: 31.05.2019 US 201916427964
(43) Date of publication of application: 02.12.2020
(73) Proprietor: Raytheon Technologies Corporation, Farmington, CT 06032 (US)
(72) Inventor: STUCKEY, Eric J., Portland, ME Maine 04102 (US); BACHELDER, Kevin, South Berwick, ME Maine 03908 (US)
(74) Representative: Dehns

(56) References cited:
- WO-A1-2013/175481
- DE-A1-102015 215 122
- US-A- 6 007 464

## Description

### BACKGROUND

This disclosure relates generally to a chip evacuator tool. More specifically, this disclosure relates to an automated chip evacuator tool that is controlled using a CNC machine.

During a machining process, unwanted pieces of metal are produced in the form of burrs or chips. Generally, burrs are raised edges or small pieces of material that remain on the edges of the workpiece after a machining process is performed. In contrast, chips are generally long, continuous strands of waste material that are produced during the machining process. Chips are formed due to continuous plastic deformation of metal without fracture in front of the cutting tool, formed by the smooth flow of the chip up the tool face. If the continuous strands of the chips become long enough, the chip can wrap around and interlock with itself as well as the part being machined. The chips must be removed to complete the machining process and to inspect the final machined part, but chips are difficult to handle, remove, and dispose of.

To remove the chips, the current process is to manually stop the machine working on the part and remove the chips by hand. The machinist is required to reach into the machine, grab the sharp chips by hand, and then pull the interlocked chips away from the part and out of the machine. Then the machinist can resume the machining or inspection process that still needs to occur. As such, there is a need for a more efficient process for removing chips from a machined part to increase machine uptime.

DE 10 2015 215122 A1 discloses a tool changer with a circular body and first hook member, on which the preamble of claim 1 is based.

US 6 007 464 A discloses a tool-changing apparatus and method for a machine tool with a circular body and first hook member.

WO 2013/175481 A1 discloses a dust extraction device for a rotary power tool with a circular body and first hook member corresponding to the preamble of claim 1.

### SUMMARY

According to one aspect of the present disclosure, a chip evacuator tool is provided in accordance with claim 1.

According to another aspect of the present disclosure, a chip removal system is provided in accordance with claim 6.

According to yet another aspect of the present disclosure, a method of removing chips from a machined part is provided in accordance with claim 7.

Features of embodiments are recited in the dependent claims.

### BRIEF DESCRIPTION OF THE DRAWINGS

FIG. 1A is a perspective view of a chip evacuator tool installed in a machine tool assembly.
FIG. 1B is a schematic including the chip evacuator tool, machine tool assembly, and a machined part.
FIG. 2 is a perspective view of the chip evacuator tool shown in FIG. 1.
FIG. 3A is a top view of the chip evacuator tool.
FIG. 3B is a bottom view of the chip evacuator tool.

### DETAILED DESCRIPTION

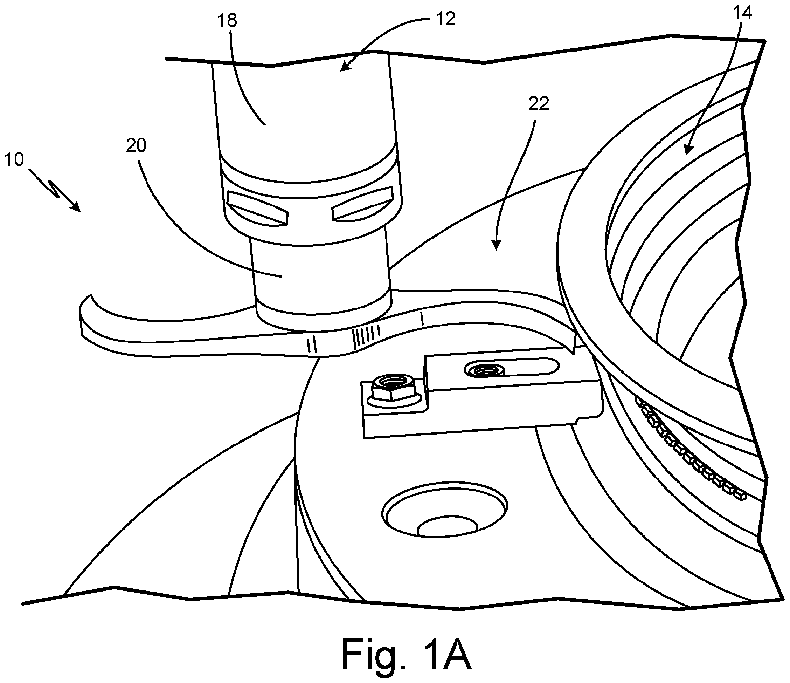

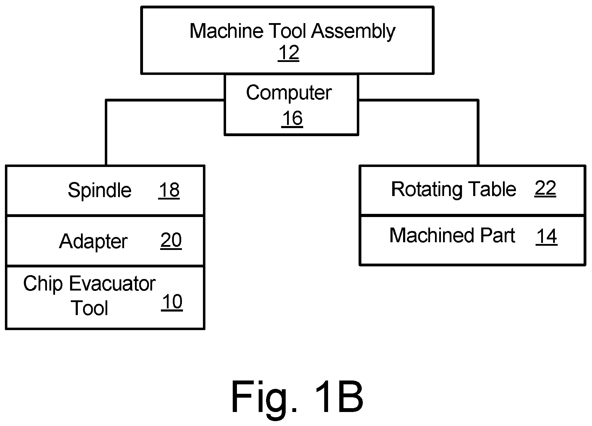

FIG. 1A is a perspective view of chip evacuator tool 10 installed in machine tool assembly 12. FIG. 1B is a schematic including chip evacuator tool 10, machine tool assembly 12, and machined part 14. FIGS. 1A and 1B will be discussed together. FIGS. 1A and 1B include chip evacuator tool 10, machine tool assembly 12, and machined part 14. Machine tool assembly 12 is a computer numerical control (CNC) machine that includes computer 16, spindle 18, adapter 20, and rotating table 22. Machine tool assembly 12 is a CNC machine in which computer 16 controls the translational movement and rotational direction/speed of spindle 18 and adapter 20. Further, computer 16 of the CNC machine also controls the rotational direction and speed of rotating table 22. Spindle 18 is a round shaft that rotates under the control of machine tool assembly 12 and includes standard features for attaching milling cutters and various other machining tools. Spindle 18 is translatable both in the vertical and horizontal direction, allowing spindle 18 to reach all portions of machined part 14. Adapter 20 is attached to spindle 18 using standard attachment features and facilitates the attachment of milling cutters or other machining tools that cannot connect directly to spindle 18 due to non-mating attachment features. Machined part 14 is attached to rotating table 22 using standard attachment means and rotates with rotating table 22 during the machining and finishing processes of machined part 14.

In the embodiment shown, machine tool assembly 12 includes spindle 18 and adapter 20, wherein adapter 20 is attached to and rotates with spindle 18. In another embodiment, machine tool assembly 12 can include only spindle 18 if spindle 18 has the appropriate fastening features to mate with chip evacuator tool 10. If machine tool assembly 12 does not include the appropriate fastening features, adapter 20 can be used to attach chip evacuator tool 10 to spindle 18 of machine tool assembly 12. In either embodiment, chip evacuator tool 10 is attached to spindle 18 or adapter 20 using standard fastening features, as will be discussed further below. Chip evacuator tool 10 is attached to and rotates with spindle 18 (either directly or through adapter 20), which is controlled by computer 16 of machine tool assembly 12.

After machined part 14 has been machined, chips are left behind that wrap around themselves and machined part 14, these chips need to be removed for inspection and final machining of machined part 14. To remove the chips from machined part 14, chip evacuator tool 10 is attached to either spindle 18 or adapter 20 and then controlled using computer 16 of machine tool assembly 12. Chip evacuator tool 10 is lowered into a position in which chip evacuator tool 10 is adjacent but not contacting machined part 14. Computer 16 of machine tool assembly 12 then sends a signal to begin rotating chip evacuator tool 10 in a first direction (clockwise as shown in FIG. 1A). Computer 16 of machine tool assembly 12 also sends a signal to rotating table 22, with attached machined part 14, to rotate in the first direction (clockwise). With rotating table 22 and machined part 14 in motion, the attached chips will come into contact with rotating chip evacuator tool 10 and the chips will be removed and discarded from machined part 14. In other words, chip evacuator tool 10 will catch or grab the chips and pull the chips away from machined part 14.

In the embodiment shown, the chips are removed from machined part 14 using chip evacuator tool 10. Further, during the chip removal process the location of spindle 18 and attached chip evacuator tool 10 remains stationary while spindle 18 rotates in a first direction and rotating table 22 and machined part 14 also rotate in the first direction. In another embodiment, machined part 14 could remain stationary while a rotating spindle 18 and attached chip evacuator tool 10 translates around the perimeter of machined part 14 and removes the chips from machined part 14. Further, in one embodiment rotating table 22 and machined part 14 rotate at a rate that is at least five times greater than the rate at which chip evacuator tool 10 rotates. During the chip removal process, rotating table 22 and machined part 14 rotate a plurality of times in an effort to ensure the chips have been removed from machined part 14 by the rotating chip evacuator tool 10.

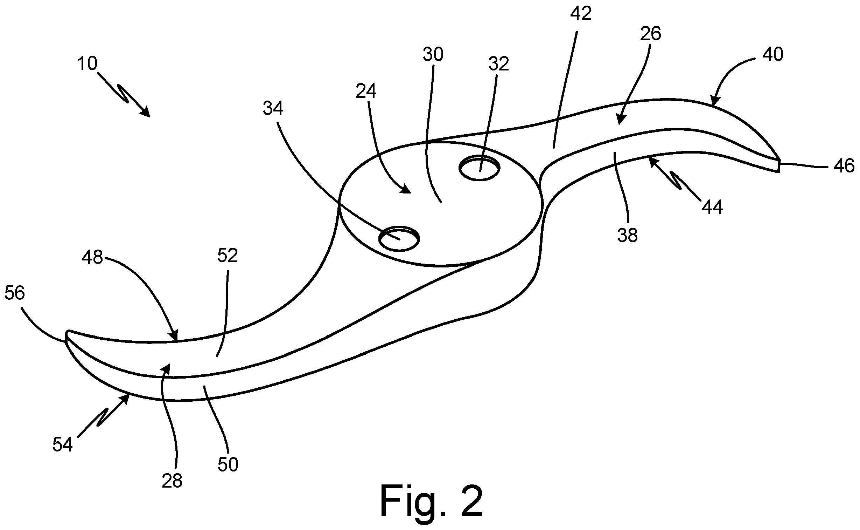

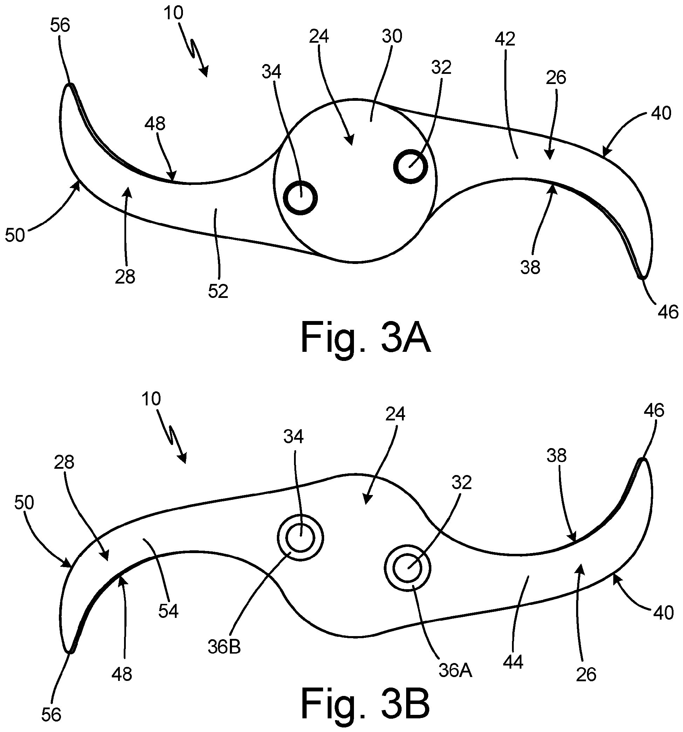

FIG. 2 is a perspective view of chip evacuator tool 10. FIG. 3A is a top view of chip evacuator tool 10 and FIG. 3B is a bottom view of chip evacuator tool 10. FIGS. 2, 3A, and 3B will be discussed together. Chip evacuator tool 10 includes circular body 24, first hook member 26, and second hook member 28. Circular body 24 includes flat surface 30, first aperture 32, second aperture 34, and counter bores 36A and 36B (shown in FIG. 3B). First hook member 26 includes first arcuate surface 38, second arcuate surface 40, first upper surface 42, first lower surface 44, and first tip 46. Second hook member 28 includes third arcuate surface 48, fourth arcuate surface 50, second upper surface 52, second lower surface 54, and second tip 56.

In the embodiment shown, chip evacuator tool 10 includes both first hook member 26 and second hook member 28. In another embodiment, chip evacuator tool 10 could include only first hook member 26 or chip evacuator tool 10 could include three or more hook members. The following disclosure will focus on the embodiment in which chip evacuator tool 10 includes both first hook member 26 and second hook member 28.

Circular body 24 includes flat surface 30, first aperture 32, second aperture 34, and counter bores 36A and 36B. Circular body 24 is the main body portion of chip evacuator tool 10 and provides a means for first hook member 26 and second hook member 28 to extend from. Further, circular body 24 includes flat surface 30 which is configured to mate with a corresponding flat surface of adapter 20 or spindle 18 (shown in FIG. 1A). First aperture 32 and second aperture 34 extend through circular body 24 and are configured to receive a fastener for securing chip evacuator tool 10 to adapter 20 or spindle 18. As best shown in FIG. 3B, counter bores 36A and 36B are positioned on a bottom surface of chip evacuator tool 10, extend partially through chip evacuator tool 10, and are configured to receive the head of the fasteners that are inserted in first aperture 32 and second aperture 34. In the embodiment shown, the fasteners that are used to secure chip evacuator tool 10 to adapter 20 or spindle 18 are bolts (not shown). In another embodiment, the fasteners can be any suitable fastener that can secure chip evacuator tool 10 to adapter 20 or spindle 18.

First hook member 26 includes first arcuate surface 38, second arcuate surface 40, first upper surface 42, first lower surface 44, and first tip 46. First hook member 26 extends from circular body 24 of chip evacuator tool 10 in a curved or bent angle configuration. First hook member 26 includes first arcuate surface 38, which is a curved surface that constitutes the inner surface of first hook member 26. First hook member 26 also includes second arcuate surface 40, which is a curved surface that constitutes the outer surface of first hook member 26. First arcuate surface 38 and second arcuate surface 40 both extend in a curved configuration until they converge at first tip 46. Further, first arcuate surface 38 and second arcuate surface 40 taper in the circumferential direction, in which first tip 46 is thinner in width than the location where first hook member 26 connects to circular body 24. Likewise, first upper surface 42 and first lower surface 44 taper in the radial direction, in which first tip 46 is thinner in height than the location where first hook member 26 connects to circular body 24. When in use, first hook member 26 is configured to catch hold of chips as first hook member 26 rotates with spindle 18. The curved configuration of first arcuate surface 38 and second arcuate surface 40 facilitate the grabbing and removal of chips from machined part 14. Further, the curved configuration helps keep the chips secure on chip evacuator tool 10 and does not allow the chips to slide off and escape chip evacuator tool 10.

Second hook member 28 includes third arcuate surface 48, fourth arcuate surface 50, second upper surface 52, second lower surface 54, and second tip 56. Second hook member 28 extends from circular body 24 of chip evacuator tool 10 in a curved or bent angle configuration. Second hook member 28 includes third arcuate surface 48, which is a curved surface that constitutes the inner surface of second hook member 28. Second hook member 28 also includes fourth arcuate surface 50, which is a curved surface that constitutes the outer surface of second hook member 28. Third arcuate surface 48 and fourth arcuate surface 50 both extend in a curved configuration until they converge at second tip 56. Further, third arcuate surface 48 and fourth arcuate surface 50 taper in the circumferential direction, in which second tip 56 is thinner in width than the location where second hook member 28 connects to circular body 24. Likewise, second upper surface 52 and second lower surface 54 taper in the radial direction, in which second tip 56 is thinner in height than the location where second hook member 28 connects to circular body 24. When in use, second hook member 28 is configured to catch hold of chips as second hook member 28 rotates with spindle 18. The curved configuration of third arcuate surface 48 and fourth arcuate surface 50 facilitate the grabbing and removal of chips from machined part 14. Further, the curved configuration helps keep the chips secure on chip evacuator tool 10 and does not allow the chips to slide off and escape chip evacuator tool 10.

First hook member 26 and second hook member 28 are positioned opposite one another about circular body 24. In other words, first hook member 26 and second hook member 28 are positioned approximately 180 degrees from each other around circular body 24. Further, as shown in FIGS. 2 and 3A-3B, first arcuate surface 38 and third arcuate surface 48 face away from each other. This results in both first hook member 26 and second hook member 28 being in an open configuration in which the inner surfaces (first arcuate surface 38 and third arcuate surface 48) are facing the direction of rotation. This allows first hook member 26 and second hook member 28 to both catch hold of and remove chips from machined part 14 when they come in contact with the chips.

In the embodiment shown, chip evacuator tool 10 is manufactured from a polycarbonate using an additive manufacturing process. In another embodiment, chip evacuator tool 10 can be manufactured using any suitable additive manufacturing or machining process that would result in the proper final geometry of chip evacuator tool 10. Further, in another embodiment, chip evacuator tool 10 can be manufactured from a metal, a thermoplastic polymer, or any other material that possess adequate material properties to withstand deformation while in use.

Chip evacuator tool 10 is used in a production machining process to automatically remove chips from machined parts, eliminating the need for manual removal by a machinist. The use of chip evacuator tool 10 eliminates the need to stop machine tool assembly 12 a plurality of times, increasing machine uptime and saving money in machining costs. Further, the use of chip evacuator tool 10 results in a safer machining process because the machinist is no longer required to reach into the machine to remove sharp chips from the machined part.

It intended that the invention is not limited to the particular embodiment disclosed, but that the invention will include all embodiments falling within the scope of the appended claims.

## Claims

1. A chip evacuator tool (10) comprising:
a circular body (24) including at least one aperture (32, 34) extending through the circular body (24); and
a first hook member (26) extending from the circular body (24), wherein the first hook member (26) includes a first arcuate surface (38) and a second arcuate surface (40) that converge at a first tip (46), and a first upper surface (42) and a first lower surface (44);
**characterized in that**:
the first arcuate surface (38) and the second arcuate surface (40) taper in a circumferential direction such that a width of the first tip (46) is less than a width of the first hook member (26) at a location where the first hook member (26) connects to the circular body (24); and
the first upper surface (42) and the first lower surface (44) taper in a radial direction such that a height of the first tip (46) is less than a height of the first hook member (26) at the location where the first hook member (26) connects to the circular body (24).

2. The chip evacuator tool of claim 1, wherein the circular body (24) includes two apertures (32, 34) extending through the circular body (24), and each aperture (32, 34) includes a counter bore (36A, 36B) extending partially through the circular body (24).

3. The chip evacuator tool of claim 1 or 2, wherein the chip evacuator tool (10) includes a second hook member (28) extending from the circular body (24), and the second hook member (28) includes a third arcuate surface (48) and a fourth arcuate surface (50) that converge at a second tip (56).

4. The chip evacuator tool of claim 3, wherein the first hook member (26) is positioned opposite the second hook member (28) about the circular body (24), and the first arcuate surface (38) of the first hook member (26) faces away from the third arcuate surface (48) of the second hook member (28).

5. The chip evacuator tool of any preceding claim, wherein the circular body (24) includes a flat surface (30) configured to abut a spindle (18) or an adapter (20) of a machine tool assembly (12).

6. A chip removal system comprising:
a machine tool assembly (12) including a translatable spindle (18); and
the chip evacuator tool (10) according to any preceding claim attached to the spindle (18);
wherein the machine tool assembly (12) is a computer numerical control (CNC) system that is controlled using a computer (16).

7. A method of removing chips from a machined part (14) comprising:
aligning a chip evacuator tool (10) adjacent the machined part (14);
rotating the chip evacuator tool (10) in a first direction;
rotating the machined part (14) in the first direction; and
removing the chips from the machined part (14) using the chip evacuator tool (10);
wherein the chip evacuator tool (10) comprises a circular body (24) including at least one aperture (32, 34) extending through the circular body (24) and a first hook member (26) extending from the circular body (24), wherein the first hook member (26) includes a first arcuate surface (38) and a second arcuate surface (40) that converge at a first tip (46); and
the removing includes the first hook member (26) catching or grabbing the chips and pulling the chips away from the machined part (14).

8. The method of claim 7, wherein a computer system is used to align a position and control a rotational speed of the chip evacuator tool (10), and wherein the computer system is used to control a rotational speed of the machined part (14).

9. The method of claim 7 or 8, wherein the circular body (24) includes two apertures (32, 34) extending through the circular body (24), and wherein each aperture (32, 34) includes a counter bore (36A, 36B) extending partially through the circular body (24).

10. The method of any of claims 7 to 9, wherein the chip evacuator tool (10) includes a second hook member (28) extending from the circular body (24), and the second hook member (28) includes a third arcuate surface (48) and a fourth arcuate surface (50) that converge at a second tip (56), and wherein, optionally, the first hook member (26) is positioned opposite the second hook member (28) about the circular body (24), and the first arcuate surface (38) of the first hook member (26) faces away from the third arcuate surface (48) of the second hook member (28).

11. The method of any of claims 7 to 10, wherein the circular body (24) of the chip evacuator tool (10) includes a flat surface (30) configured to abut a spindle (18) or an adapter (20) of a machine tool assembly (12).

12. The method of claim 11, wherein removing the chips from the machined part (14) using the chip evacuator tool (10) includes a location of the spindle (18) remaining stationary while the spindle (18), connected chip evacuator tool (10), and machined part (14) all rotate in the first direction.

13. The method of any of claims 7 to 12, wherein the machined part (14) rotates at a rate at least 5 times greater than a rate at which the chip evacuator tool (10) rotates.

14. The method of any of claims 7 to 13, wherein removing the chips from the machined part (14) using the chip evacuator tool (10) includes the machined part (14) completing a plurality of rotations.

## Patentansprüche

1. Spanbeseitigungswerkzeug (10), umfassend:
einen kreisförmigen Körper (24) beinhaltend mindestens eine Öffnung (32, 34), die sich durch den kreisförmigen Körper (24) erstreckt; und
ein erstes Hakenelement (26), das sich von dem kreisförmigen Körper (24) erstreckt, wobei das erste Hakenelement (26) eine erste bogenförmige Fläche (38) und eine zweite bogenförmige Fläche (40), die an einer ersten Spitze (46) zusammenlaufen, und eine erste obere Fläche (42) und eine erste untere Fläche (44) beinhaltet;
**dadurch gekennzeichnet, dass**:
sich die erste bogenförmige Fläche (38) und die zweite bogenförmige Fläche (40) in einer Umfangsrichtung verjüngen, sodass eine Breite der ersten Spitze (46) an einer Stelle, an der sich das erste Hakenelement (26) mit dem kreisförmigen Körper (24) verbindet, geringer als eine Breite des ersten Hakenelements (26) ist; und
sich die erste obere Fläche (42) und die erste untere Fläche (44) in einer radialen Richtung verjüngen, sodass eine Höhe der ersten Spitze (46) an der Stelle, an der sich das Hakenelement (26) mit dem kreisförmigen Körper (24) verbindet, geringer als eine Höhe des ersten Hakenelements (26) ist.

2. Spanbeseitigungswerkzeug nach Anspruch 1, wobei der kreisförmige Körper (24) zwei Öffnungen (32, 34) beinhaltet, die sich durch den kreisförmigen Körper (24) erstrecken, und jede Öffnung (32, 34) eine Senkbohrung (36A, 36B) beinhaltet, die sich teilweise durch den kreisförmigen Körper (24) erstreckt.

3. Spanbeseitigungswerkzeug nach Anspruch 1 oder 2, wobei das Spanbeseitigungswerkzeug (10) ein zweites Hakenelement (28) beinhaltet, das sich von dem kreisförmigen Körper (24) erstreckt, und das zweite Hakenelement (28) eine dritte bogenförmige Fläche (48) und eine vierte bogenförmige Fläche (50) beinhaltet, die an einer zweiten Spitze (56) zusammenlaufen.

4. Spanbeseitigungswerkzeug nach Anspruch 3, wobei das erste Hakenelement (26) gegenüber dem zweiten Hakenelement (28) um den kreisförmigen Körper (24) positioniert ist und die erste bogenförmige Fläche (38) des ersten Hakenelements ( 26) von der dritten bogenförmigen Fläche (48) des zweiten Hakenelements (28) wegweist.

5. Spanbeseitigungswerkzeug nach einem der vorstehenden Ansprüche, wobei der kreisförmige Körper (24) eine ebene Fläche (30) beinhaltet, die so konfiguriert ist, dass sie an einer Spindel (18) oder einem Adapter (20) einer Werkzeugmaschinenbaugruppe (12) anliegt.

6. Spanbeseitigungssystem, umfassend:
eine Werkzeugmaschinenbaugruppe (12) beinhaltend eine verschiebbare Spindel (18); und
das Spanbeseitigungswerkzeug (10) nach einem der vorstehenden Ansprüche, das an der Spindel (18) befestigt ist;
wobei die Werkzeugmaschinenbaugruppe (12) ein CNC-System (Computer Numerical Control) ist, das unter Verwendung eines Computers (16) gesteuert wird.

7. Verfahren zum Entfernen von Spänen von einem maschinell bearbeiteten Teil (14), umfassend:
Ausrichten eines Spanbeseitigungswerkzeugs (10) anliegend an dem maschinell bearbeiteten Teil (14);
Drehen des Spanbeseitigungswerkzeugs (10) in eine erste Richtung;
Drehen des maschinell bearbeiteten Teils (14) in die erste Richtung; und
Entfernen der Späne von dem maschinell bearbeiteten Teil (14) unter Verwendung des Spanbeseitigungswerkzeugs (10);
wobei das Spanbeseitigungswerkzeug (10) einen kreisförmigen Körper (24), der mindestens eine Öffnung (32, 34) beinhaltet, die sich durch den kreisförmigen Körper (24) erstreckt, und ein erstes Hakenelement (26), das sich von dem kreisförmigen Körper (24) erstreckt, umfasst, wobei das erste Hakenelement (26) eine erste bogenförmige Fläche (38) und eine zweite bogenförmige Fläche (40) beinhaltet, die an einer ersten Spitze (46) zusammenlaufen; und
das Entfernen beinhaltet, dass das erste Hakenelement (26) die Späne auffängt oder ergreift und die Späne von dem maschinell bearbeiteten Teil (14) wegzieht.

8. Verfahren nach Anspruch 7, wobei ein Computersystem verwendet wird, um eine Position auszurichten und eine Rotationsgeschwindigkeit des Spanbeseitigungswerkzeugs (10) zu steuern, und wobei das Computersystem verwendet wird, um eine Rotationsgeschwindigkeit des maschinell bearbeiteten Teils (14) zu steuern.

9. Verfahren nach Anspruch 7 oder 8, wobei der kreisförmige Körper (24) zwei Öffnungen (32, 34) beinhaltet, die sich durch den kreisförmigen Körper (24) erstrecken, und jede Öffnung (32, 34) eine Senkbohrung (36A, 36B) beinhaltet, die sich teilweise durch den kreisförmigen Körper (24) erstreckt.

10. Verfahren nach einem der Ansprüche 7 bis 9, wobei das Spanbeseitigungswerkzeug (10) ein zweites Hakenelement (28) beinhaltet, das sich von dem kreisförmigen Körper (24) erstreckt, und das zweite Hakenelement (28) eine dritte bogenförmige Fläche (48) und eine vierte bogenförmige Fläche (50) beinhaltet, die an einer zweiten Spitze (56) zusammenlaufen, und wobei optional das erste Hakenelement (26) gegenüber dem zweiten Hakenelement (28) um den kreisförmigen Körper (24) positioniert ist und die erste bogenförmige Fläche (38) des ersten Hakenelements (26) von der dritten bogenförmigen Fläche (48) des zweiten Hakenelements (28) wegweist.

11. Verfahren nach einem der Ansprüche 7 bis 10, wobei der kreisförmige Körper (24) des Spanbeseitigungswerkzeugs (10) eine ebene Fläche (30) beinhaltet, die so konfiguriert ist, dass sie an einer Spindel (18) oder einem Adapter (20) einer Werkzeugmaschinenbaugruppe (12) anliegt.

12. Verfahren nach Anspruch 11, wobei das Entfernen der Späne von dem maschinell bearbeiteten Teil (14) unter Verwendung des Spanbeseitigungswerkzeugs (10) eine Position der Spindel (18) beinhaltet, die stationär bleibt, während sich die Spindel (18), die mit dem Spanbeseitigungswerkzeug (10) verbunden ist, und das maschinell bearbeitete Teil (14) alle in die erste Richtung drehen.

13. Verfahren nach einem der Ansprüche 7 bis 12, wobei sich das maschinell bearbeitete Teil (14) mit einer Geschwindigkeit dreht, die mindestens fünfmal größer als die Geschwindigkeit ist, mit der sich das Spanbeseitigungswerkzeug (10) dreht.

14. Verfahren nach einem der Ansprüche 7 bis 13, wobei das Entfernen der Späne von dem maschinell bearbeiteten Teil (14) unter Verwendung des Spanbeseitigungswerkzeugs (10) das Vollführen einer Vielzahl von Umdrehungen des maschinell bearbeiteten Teils (14) beinhaltet.

## Revendications

1. Outil évacuateur de copeaux (10) comprenant :
un corps circulaire (24) comprenant au moins une ouverture (32, 34) s'étendant à travers le corps circulaire (24) ; et
un premier élément de crochet (26) s'étendant depuis le corps circulaire (24), dans lequel le premier élément de crochet (26) comprend une première surface arquée (38) et une deuxième surface arquée (40) qui convergent à une première pointe (46), et une première surface supérieure (42) et une première surface inférieure (44) ;
**caractérisé en ce que** :
la première surface arquée (38) et la deuxième surface arquée (40) se rétrécissent dans une direction circonférentielle de sorte qu'une largeur de la première pointe (46) est inférieure à une largeur du premier élément de crochet (26) à un emplacement où le premier l'élément de crochet (26) se connecte au corps circulaire (24) ; et
la première surface supérieure (42) et la première surface inférieure (44) se rétrécissent dans une direction radiale de sorte qu'une hauteur de la première pointe (46) est inférieure à une hauteur du premier élément de crochet (26) à l'emplacement où le premier élément de crochet (26) se connecte au corps circulaire (24).

2. Outil évacuateur de copeaux selon la revendication 1, dans lequel le corps circulaire (24) comprend deux ouvertures (32, 34) s'étendant à travers le corps circulaire (24), et chaque ouverture (32, 34) comprend un contre-alésage (36A, 36B) s'étendant partiellement à travers le corps circulaire (24).

3. Outil évacuateur de copeaux selon la revendication 1 ou 2, dans lequel l'outil évacuateur de copeaux (10) comprend un second élément de crochet (28) s'étendant depuis le corps circulaire (24), et le second élément de crochet (28) comprend une troisième surface arquée (48) et une quatrième surface arquée (50) qui convergent vers une seconde pointe (56).

4. Outil évacuateur de copeaux selon la revendication 3, dans lequel le premier élément de crochet (26) est positionné à l'opposé du second élément de crochet (28) autour du corps circulaire (24), et la première surface arquée (38) du premier élément de crochet (26) est tournée à l'opposé de la troisième surface arquée (48) du second élément de crochet (28).

5. Outil évacuateur de copeaux selon une quelconque revendication précédente, dans lequel le corps circulaire (24) comprend une surface plate (30) configurée pour buter contre une broche (18) ou un adaptateur (20) d'un ensemble de machine-outil (12) .

6. Système d'élimination de copeaux comprenant :
un ensemble de machine-outil (12) comprenant une broche mobile en translation (18) ; et
l'outil évacuateur de copeaux (10) selon une quelconque revendication précédente fixé à la broche (18) ;
dans lequel l'ensemble de machine-outil (12) est un système de commande numérique par ordinateur (CNC) qui est commandé à l'aide d'un ordinateur (16).

7. Procédé d'élimination de copeaux d'une pièce usinée (14) comprenant :
l'alignement d'un outil évacuateur de copeaux (10) adjacent à la pièce usinée (14) ;
la rotation de l'outil évacuateur de copeaux (10) dans un premier sens ;
la rotation de la pièce usinée (14) dans le premier sens ; et
l'élimination des copeaux de la pièce usinée (14) à l'aide de l'outil évacuateur de copeaux (10) ;
dans lequel l'outil d'évacuation de copeaux (10) comprend un corps circulaire (24) comprenant au moins une ouverture (32, 34) s'étendant à travers le corps circulaire (24) et un premier élément de crochet (26) s'étendant depuis le corps circulaire (24), dans lequel le premier élément de crochet (26) comprend une première surface arquée (38) et une deuxième surface arquée (40) qui convergent au niveau d'une première pointe (46) ; et l'élimination comprend le premier élément de crochet (26) attrapant ou saisissant les copeaux et éloignant les copeaux de la pièce usinée (14).

8. Procédé selon la revendication 7, dans lequel un système informatique est utilisé pour aligner une position et commander une vitesse de rotation de l'outil évacuateur de copeaux (10), et dans lequel le système informatique est utilisé pour commander une vitesse de rotation de la pièce usinée (14).

9. Procédé selon la revendication 7 ou 8, dans lequel le corps circulaire (24) comprend deux ouvertures (32, 34) s'étendant à travers le corps circulaire (24), et dans lequel chaque ouverture (32, 34) comprend un contre-alésage (36A, 36B) s'étendant partiellement à travers le corps circulaire (24).

10. Procédé selon l'une quelconque des revendications 7 à 9, dans lequel l'outil évacuateur de copeaux (10) comprend un second élément de crochet (28) s'étendant depuis le corps circulaire (24), et le second élément de crochet (28) comprend une troisième surface arquée (48) et une quatrième surface arquée (50) qui convergent à une seconde pointe (56), et dans lequel, éventuellement, le premier élément de crochet (26) est positionné à l'opposé du second élément de crochet (28) autour du corps circulaire (24), et la première surface arquée (38) du premier élément de crochet (26) est tournée à l'opposé de la troisième surface arquée (48) du second élément de crochet (28).

11. Procédé selon l'une quelconque des revendications 7 à 10, dans lequel le corps circulaire (24) de l'outil évacuateur de copeaux (10) comprend une surface plate (30) configurée pour buter contre une broche (18) ou un adaptateur (20) d'un ensemble de machine-outil (12).

12. Procédé selon la revendication 11, dans lequel l'élimination des copeaux de la pièce usinée (14) à l'aide de l'outil évacuateur de copeaux (10) comprend un emplacement de la broche (18) restant stationnaire tandis que la broche (18), l'outil évacuateur de copeaux connecté (10) et la pièce usinée (14) tournent tous dans le premier sens.

13. Procédé selon l'une quelconque des revendications 7 à 12, dans lequel la pièce usinée (14) tourne à une vitesse au moins 5 fois supérieure à une vitesse à laquelle tourne l'outil évacuateur de copeaux (10).

14. Procédé selon l'une quelconque des revendications 7 à 13, dans lequel l'élimination des copeaux de la pièce usinée (14) à l'aide de l'outil évacuateur de copeaux (10) comprend la partie usinée (14) effectuant une pluralité de rotations.
